# EUROPEAN PATENT APPLICATION

(11) **EP 3 993 494 A1**
(43) Date of publication of application: **04.05.2022**
(21) Application number: 20860514.7
(22) Date of filing: 31.08.2020
(51) Int. Cl.: H04W 28/24

(54) **COMMUNICATION METHOD AND APPARATUS**

(30) Priority: 05.09.2019 CN 201910835984
(71) Applicant: Huawei Technologies Co., Ltd., Longgang District Shenzhen, Guangdong 518129 (CN)
(72) Inventor: CHEN, Lei, Shenzhen, Guangdong 518129 (CN); WANG, Xuelong, Shenzhen, Guangdong 518129 (CN); LI, Bingzhao, Shenzhen, Guangdong 518129 (CN); WANG, Hong, Shenzhen, Guangdong 518129 (CN)
(74) Representative: Isarpatent
(86) International application number: PCT/CN2020/112733
(87) International publication number: WO 2021/043113

(57) **Abstract**

This application provides a communication method and apparatus. The method includes: A first core network device generates first information, and sends the first information to a first access network device, where the first information is used to indicate a service type and/or a service priority of a first service, the first service is a service of a first terminal device in a radio resource control RRC inactive state, and the first access network device is an anchor access network device of the first terminal device. The first core network device sends the first access network device the first information used to indicate the service type and/or the service priority of the first service of the first terminal device, so that the service type and/or the service priority of the first service may be carried when the first access network device pages the first terminal device. Therefore, the first terminal device can determine whether to process the first service, thereby improving service processing flexibility, and avoiding impact between services of different service types or service priorities.

## Description

### CROSS-REFERENCE TO RELATED APPLICATIONS

This application claims priority to Chinese Patent Application No. 201910835984.8, filed with the China National Intellectual Property Administration on September 5, 2019 and entitled "COMMUNICATION METHOD AND APPARATUS", which is incorporated herein by reference in its entirety.

### TECHNICAL FIELD

This application relates to the field of communication technologies, and in particular, to a communication method and apparatus.

### BACKGROUND

Currently, a new radio resource control (radio resource control, RRC) connection state, namely, an RRC inactive state (also referred to as RRC_INACTIVE), is introduced into a 5th generation (5th generation, 5G) mobile communication technology new radio (new radio, NR) system. In the RRC inactive state, when a service arrives at a network side, data or signaling directly arrives at an access network device, and then the access network device is triggered to page a terminal device.

In a conventional technology, when an access network device pages a terminal device in an RRC inactive state, a paging message cannot carry a paging cause value. Consequently, the terminal device cannot determine, based on the paging cause value, whether to respond to the received paging message. For a terminal device that includes two subscriber identification module (subscriber identification module, SIM) cards but has only a single transmission capability, that a paging message does not include a paging cause value may cause a low-priority service on one SIM card to affect a high-priority service on the other SIM card. For example, when processing a service on one SIM card, the terminal device receives a paging message from the access network device for the other SIM card, where the paging message does not include a paging cause value. As a result, the terminal device may fail to respond to a high-priority service on the other SIM card in time.

Embodiments of this application provide a communication method and apparatus, to implement carrying of a paging cause value in a paging message when a terminal device in an RRC inactive state is paged.

According to a first aspect, an embodiment of this application provides a communication method. The method may be performed by a first core network device, and the method includes: The first core network device generates first information, where the first information is used to indicate a service type and/or a service priority of a first service, and the first service is a service of a first terminal device in a radio resource control RRC inactive state; and the first core network device sends the first information to a first access network device, where the first access network device is an anchor access network device of the first terminal device.

According to the technical solution provided in this embodiment of this application, for the first terminal device in the RRC inactive state, the first core network device may send the first access network device the first information used to indicate the service type and/or the service priority of the first service of the first terminal device, where the first access network device is the anchor access network device of the first terminal device. In this way, when paging the first terminal device, the first access network device may carry information about the service type and/or the service priority of the first service, so that the first terminal device determines whether to process the first service, and communication performance is improved.

In a possible design, the first information is included in a first message, the first message further includes non-access stratum NAS information, and the NAS information is used to indicate the first service.

According to a second aspect, an embodiment of this application provides a communication method. The method may be performed by a first access network device, and the method includes: The first access network device receives first information from a first core network device, where the first information is used to indicate a service type and/or a service priority of a first service, and the first service is a service of a first terminal device in a radio resource control RRC inactive state; and the first access network device sends a first paging message to the first terminal device, where the first paging message includes the service type and/or the service priority of the first service.

According to the technical solution provided in this embodiment of this application, for the first terminal device in the RRC inactive state, the first access network device may receive, from the first core network device, the first information used to indicate the service type and/or the service priority of the first service of the first terminal device, carry the service type and/or the service priority of the first service in a paging message, and send the paging message to the first terminal device. In this way, the service type and/or the service priority of the first service may be equivalent to a cause value for paging the first terminal device, so that the first terminal device can determine, based on the service type and/or the service priority of the first service, whether to process the first service, thereby improving service processing flexibility, and avoiding mutual impact between services of different types or priorities.

In a possible design, the first access network device is an anchor access network device of the first terminal device.

In a possible design, the first access network device may further send a second message to a second access network device, where the second message includes the service type and/or the service priority of the first service, the second message is used to indicate the second access network device to send a second paging message to the first terminal device, the second paging message includes the service type and/or the service priority of the first service, and the second access network device and the first access network device are located in a same RNA area.

According to the technical solution provided in this embodiment of this application, because the first terminal device is in the RRC inactive state, the first access network device may initiate RNA paging for the first terminal device. In other words, another access network device in an RNA area corresponding to the first terminal device also sends a paging message to the first terminal device. Therefore, the first access network device may further send the second message to the second access network device located in the same RNA area, carry the service type and/or the service priority of the first service in the second message, and indicate the second access network device to send a paging message to the first terminal device. In this way, the paging message sent by the second access network device may also include the service type and/or the service priority of the first service, so that the first terminal device determines, based on the service type and/or the service priority of the first service, whether to process the first service.

In a possible design, the first information is included in a first message, the first message further includes non-access stratum NAS information, and the NAS information is used to indicate the first service. The first access network device may further send the NAS information to the first terminal device; or the first access network device may further send the NAS information to the second access network device.

According to a third aspect, an embodiment of this application provides a communication method. The method may be performed by a first terminal device, and the method includes: The first terminal device receives a paging message from an access network device, where the paging message includes a service type and/or a service priority of a first service, and the first terminal device is in a radio resource control RRC inactive state; and the first terminal device determines, based on the service type and/or the service priority of the first service, whether to process the first service.

According to the technical solution provided in this embodiment of this application, when the first terminal device is in the RRC inactive state, a paging message received by the first terminal device from a first access network device may include the service type and/or the service priority of the first service, and the service type and/or the service priority of the first service may be equivalent to a cause value for paging the first terminal device. In this way, the first terminal device can determine, based on the service type and/or the service priority of the first service, whether to process the first service, thereby improving service processing flexibility, and avoiding mutual impact between services of different types or priorities.

In a possible design, that the first terminal device determines, based on the service priority of the first service, whether to process the first service may include: If the first terminal device is processing a second service, and the service priority of the first service is higher than a priority of the second service, the first terminal device suspends the second service, where the first service is associated with a first identifier of the first terminal device, and the second service is associated with a second identifier of the first terminal device.

In this way, it can be learned that the first terminal device may determine, based on the service priority of the first service and the service priority of the second service being processed, whether to process the first service, and determine to process the first service when the service priority of the first service is higher than the service priority of the second service. Therefore, a technical problem that the first terminal device cannot respond to an incoming high-priority service in time because the first terminal device is processing a low-priority service is avoided.

In a possible design, that the first terminal device determines, based on the service type of the first service, whether to process the first service may include: If the first terminal device is processing a second service, the first terminal device sends prompt information, where the prompt information is used to indicate the service type of the first service, the first service is associated with a first identifier of the first terminal device, and the second service is associated with a second identifier of the first terminal device; and the first terminal device obtains response information for the prompt information, and determines, based on the response information, whether to process the first service.

In this way, it can be learned that the first terminal device may also determine, based on the service type of the first service and the service type of the second service being processed, and with reference to the obtained response information, whether to process the first service, to effectively improve service processing flexibility and improve user experience.

In a possible design, if the first terminal device determines to process the first service, the first terminal device may further receive non-access stratum NAS information from the access network device, where the NAS information is used to indicate the first service.

According to a fourth aspect, an embodiment of this application provides another communication method. The method may be performed by a first core network device, and the method includes: The first core network device receives transmission suspending request information from a first terminal device, where the transmission suspending request information includes a second identifier of the first terminal device, the transmission suspending request information is used to request to suspend a second service of the first terminal device, and the second service is associated with the second identifier of the first terminal device; and the first core network device sends first indication information to a third access network device, where the first indication information is used to indicate to release a radio resource control RRC state that is associated with the second identifier and that is of the first terminal device to an RRC idle state or an RRC inactive state.

According to the technical solution provided in this embodiment of this application, when the first terminal device needs to suspend the second service associated with the second identifier, the first core network device may receive the transmission suspending request information from the first terminal device, and indicate the third access network device to release the RRC state that is associated with the second identifier and that is of the first terminal device to the RRC idle state or the RRC inactive state. In this way, the second service that is associated with the second identifier and that is of the first terminal device may be suspended, and the first terminal device does not continue receiving data of the second service.

In a possible design, the first core network device may further send second indication information to a second core network device, where the second indication information is used to indicate the second core network device to stop sending data of the second service to the third access network device. In this way, the second core network device does not continue sending the data of the second service to the third access network device, and the second service is suspended from a network side.

In a possible design, the first core network device may further send transmission suspending response information to the first terminal device, where the transmission suspending response information includes the second identifier, and the transmission suspending response information is used to indicate that the second service has been suspended.

According to a fifth aspect, an embodiment of this application provides another communication method. The method may be performed by a first terminal device, and the method includes: The first terminal device sends transmission suspending request information to a first core network device, where the transmission suspending request information includes a second identifier of the first terminal device, the transmission suspending request information is used to request to suspend a second service of the first terminal device, and the second service is associated with the second identifier of the first terminal device; and the first terminal device receives transmission suspending response information sent by the first core network device, where the transmission suspending response information is used to indicate that the second service has been suspended.

According to the technical solution provided in this embodiment of this application, when the first terminal device needs to suspend the second service associated with the second identifier, the first terminal device may send the transmission suspending request information to the first core network device, and receive the transmission suspending response information sent by the first core network device, so that the second service that is associated with the second identifier and that is of the first terminal device can be suspended.

In a possible design, the first terminal device may further receive a first paging message from a first access network device, where the first paging message includes a service type and/or a service priority of a first service, the first service is associated with a first identifier of the first terminal device, and a radio resource control RRC state that is associated with the first identifier and that is of the first terminal device is an RRC inactive state; and the terminal device determines, based on the service type and/or the service priority of the first service, that the second service needs to be suspended. In this way, when receiving the first paging message, and determining, based on the service type and/or the service priority of the first service in the first paging message, that the first service needs to be processed, the first terminal device may determine that the second service needs to be suspended, and further send the transmission suspending request information to the first core network device.

In a possible design, the first terminal device may further receive an RRC connection release message from a third access network device, where the RRC connection release message is used to release an RRC state that is associated with the second identifier and that is of the first terminal device to an RRC idle state or an RRC inactive state. In this way, the first terminal device does not continue receiving data of the second service.

According to a sixth aspect, an embodiment of this application provides still another communication method. The method may be performed by a first core network device, and the method includes: The first core network device receives third indication information from a first terminal device, where the third indication information is used to indicate a first identifier and a second identifier of the first terminal device; the first core network device determines that a first service of the first terminal device arrives, where the first service is associated with the first identifier of the first terminal device, and a radio resource control RRC state that is associated with the first identifier and that is of the first terminal device is an RRC inactive state or an RRC idle state; and the first core network device determines, based on a service type or a service priority of the first service and a service type or a service priority of a second service, whether to process the first service, where the second service is associated with the second identifier of the first terminal device.

According to the technical solution provided in this embodiment of this application, the first core network device may receive, from the first terminal device, the third indication information used to indicate the first identifier and the second identifier of the first terminal device, so that the first core network device can associate or bind the first identifier with the second identifier of the first terminal device from a network side. Further, when the first core network device determines that the first service associated with the first identifier of the first terminal device arrives, the first core network device may determine, based on the service type or the service priority of the first service and the service type or the service priority of the second service that is being processed by the first terminal device and that is associated with the second identifier, whether to process the first service. In this way, the first terminal device does not automatically determine whether to process the first service, to effectively improve service processing efficiency and reduce power consumption of the terminal device.

In a possible design, the third indication information includes capability information of the first terminal device, and the capability information is used to indicate that a transmission capability of the first terminal device is single transmission. According to the technical solution in this embodiment of this application, when the first terminal device has a single transmission capability, the first core network device may determine, based on the service type or the service priority of the first service and the service type or the service priority of the second service processed by the first terminal device, whether the first terminal device processes the first service.

In a possible design, if the first core network device determines to process the first service, the first core network device may further send fourth indication information to an access network device, where the fourth indication information is used to indicate the access network device to page the first identifier of the first terminal device. It can be learned that if the first core network device determines to process the first service, the first core network device may page the first terminal device, so that the RRC state that is associated with the first identifier and that is of the first terminal device switches to an RRC connected state.

In a possible design, if the first core network device determines to process the first service, the first core network device may further send first indication information to the access network device, where the first indication information is used to indicate to release an RRC state that is associated with the second identifier and that is of the first terminal device to the RRC idle state or the RRC inactive state; and/or the first core network device may further send second indication information to a second core network device, where the second indication information is used to indicate the second core network device to stop sending data of the second service to the access network device. In this way, it can be learned that, if the first core network device determines to process the first service, the first core network device may further trigger a procedure of suspending the second service that is associated with the second identifier and that is of the first terminal device.

In a possible design, the first core network device may further receive service priority information from the first terminal device, where the service priority information includes a priority of a service of at least one service type of the first terminal device. In this way, different terminal devices may set different service priorities for services of various service types, to effectively improve service processing flexibility and improve user experience.

According to a seventh aspect, an embodiment of this application provides still another communication method. The method may be performed by a first terminal device, and the method includes: The first terminal device sends third indication information to a first core network device, where the third indication information is used to indicate a first identifier and a second identifier of the first terminal device; the first terminal device receives data of a second service from an access network device, where the second service is associated with the second identifier of the first terminal device; the first terminal device receives a paging message from the access network device, where the paging message includes the first identifier, and a radio resource control RRC state that is associated with the first identifier and that is of the first terminal device is an RRC inactive state; and the first terminal device suspends the second service, and receives data of a first service from the access network device, where the first service is associated with the first identifier of the first terminal device, and a priority of the first service is higher than a priority of the second service.

According to the technical solution provided in this embodiment of this application, the first terminal device may send the first core network device the third indication information used to indicate the first identifier and the second identifier of the first terminal device, so that the first core network device associates or binds the first identifier with the second identifier of the first terminal device from a network side. Further, when the first core network device determines that the first service associated with the first identifier of the first terminal device arrives, the first core network device may determine, based on the service type or the service priority of the first service and the service type or the service priority of the second service that is being processed by the first terminal device and that is associated with the second identifier, whether to process the first service. In this way, the first terminal device does not automatically determine whether to process the first service, to effectively improve service processing efficiency and reduce power consumption of the terminal device.

In a possible design, the third indication information includes capability information of the first terminal device, and the capability information is used to indicate that a transmission capability of the first terminal device is single transmission. According to the technical solution in this embodiment of this application, the first terminal device may notify the first core network device of a single transmission capability of the first terminal device, so that when the first terminal device has the single transmission capability, the first core network device determines, based on the service type or the service priority of the first service and the service type or the service priority of the second service processed by the first terminal device, whether the first terminal device processes the first service.

In a possible design, the first terminal device may further receive an RRC connection release message from the access network device, where the RRC connection release message is used to release an RRC state that is associated with the second identifier and that is of the first terminal device to an RRC idle state or an RRC inactive state. It can be learned that, if the first core network device determines to process the first service, the first core network device may suspend the second service that is associated with the second identifier and that is of the first terminal device, and release the RRC state that is associated with the second identifier and that is of the first terminal device from an RRC connected state to the RRC idle state or the RRC inactive state.

In a possible design, the first terminal device may further send service priority information to the first core network device, where the service priority information includes a priority of a service of at least one service type of the first terminal device. In this way, different terminal devices may set different service priorities for services of various service types, to effectively improve service processing flexibility and improve user experience.

According to an eighth aspect, an embodiment of this application provides a communication apparatus. The communication apparatus may have a function of implementing the first core network device in any one of the first aspect or the possible designs of the first aspect, a function of implementing the first core network device in any one of the fourth aspect or the possible designs of the fourth aspect, or a function of implementing the first core network device in any one of the sixth aspect or the possible designs of the sixth aspect. The communication apparatus may be a network element AMF in a core network, or may be another network function that has an access and mobility management function in the core network. The foregoing network element or network function may be a network element in a hardware device, may be a software function running on dedicated hardware, or may be a virtualization function instantiated on a platform (for example, a cloud platform). The hardware, the software function, or the virtualization function includes one or more modules corresponding to the foregoing function.

The communication apparatus also has a function of implementing the first terminal device in any one of the third aspect or the possible designs of the third aspect, a function of implementing the first terminal device in any one of the fifth aspect or the possible designs of the fifth aspect, or a function of implementing the first terminal device in any one of the seventh aspect or the possible designs of the seventh aspect. The communication apparatus may be a terminal device, for example, a handheld terminal device or a vehicle-mounted terminal device, or may be an apparatus included in the terminal device, for example, a chip, or may be an apparatus including the terminal device. A function of the foregoing first terminal device may be implemented by hardware, or may be implemented by hardware by executing corresponding software. The hardware or the software includes one or more modules corresponding to the foregoing function.

The communication apparatus may also have a function of implementing the access network device in any one of the second aspect or the possible designs of the second aspect. The communication apparatus may be an access network device, for example, a base station, or may be an apparatus included in the access network device, for example, a chip. A function of the foregoing access network device may be implemented by hardware, or may be implemented by hardware by executing corresponding software. The hardware or the software includes one or more modules corresponding to the foregoing function.

In a possible design, a structure of the communication apparatus includes a processing module and a transceiver module. The processing module is configured to support the communication apparatus in performing a corresponding function in any one of the first aspect to the seventh aspect or any design of the aspect. The transceiver module is configured to support communication between the communication apparatus and another communication device. For example, when the communication apparatus is a first core network device, the communication apparatus may send a first access network device first information used to indicate a service type and/or a service priority of a first service. The communication apparatus may further include a storage module. The storage module is coupled to the processing module, and stores program instructions and data that are necessary for the communication apparatus. In an example, the processing module may be a processor, a communication module may be a transceiver, and the storage module may be a memory. The memory may be integrated with the processor, or may be disposed separately from the processor. This is not limited in this application.

In another possible design, a structure of the communication apparatus includes a processor, and may further include a memory. The processor is coupled to the memory, and may be configured to execute computer program instructions stored in the memory, to enable the communication apparatus to perform the method in any one of the first aspect to the seventh aspect or any possible design of the aspect. Optionally, the communication apparatus further includes a communication interface, and the processor is coupled to the communication interface. When the communication apparatus is a terminal device, the communication interface may be a transceiver or an input/output interface. When the communication apparatus is a chip included in the terminal device, the communication interface may be an input/output interface of the chip. Optionally, the transceiver may be a transceiver circuit, and the input/output interface may be an input/output circuit.

According to a ninth aspect, an embodiment of this application provides a chip system, including a processor, where the processor is coupled to a memory. The memory is configured to store a program or instructions. When the program or the instructions is/are executed by the processor, the chip system is enabled to implement the method in any one of the first aspect to the seventh aspect or any possible design of the aspect.

Optionally, the chip system further includes an interface circuit. The interface circuit is configured to: receive code instructions and transmit the code instructions to the processor.

Optionally, there may be one or more processors in the chip system. The processor may be implemented by using hardware, or may be implemented by using software. When the processor is implemented by using the hardware, the processor may be a logic circuit, an integrated circuit, or the like. When the processor is implemented by using the software, the processor may be a general-purpose processor, and is implemented by reading software code stored in the memory.

Optionally, there may also be one or more memories in the chip system. The memory may be integrated with the processor, or may be disposed separately from the processor. This is not limited in this application. For example, the memory may be a non-transitory processor, for example, a read-only memory ROM. The memory and the processor may be integrated into a same chip, or may be respectively disposed on different chips. A type of the memory and a manner of disposing the memory and the processor are not specifically limited in this application.

According to a tenth aspect, an embodiment of this application provides a computer-readable storage medium. The computer storage medium stores computer-readable instructions. When a computer reads and executes the computer-readable instructions, the computer is enabled to perform the method in any one of the first aspect to the seventh aspect or any possible design of the aspect.

According to an eleventh aspect, an embodiment of this application provides a computer program product. When a computer reads and executes the computer program product, the computer is enabled to perform the method in any one of the first aspect to the seventh aspect or any possible design of the aspect.

According to a twelfth aspect, an embodiment of this application provides a communication system. The communication system includes the first core network device, the first access network device, and the first terminal device in the foregoing aspects. Optionally, the communication system may further include a second core network device.

### BRIEF DESCRIPTION OF DRAWINGS

FIG. 1 is a schematic diagram of a network architecture of a communication system to which an embodiment of this application is applicable;
FIG. 2 is a schematic flowchart of a communication method according to an embodiment of this application;
FIG. 3 is a schematic flowchart of another communication method according to an embodiment of this application;
FIG. 4 is a schematic flowchart of still another communication method according to an embodiment of this application;
FIG. 5 is a schematic diagram of a structure of a communication apparatus according to an embodiment of this application;
FIG. 6 is another schematic diagram of a structure of a communication apparatus according to an embodiment of this application;
FIG. 7 is a schematic diagram of a structure of another communication apparatus according to an embodiment of this application;
FIG. 8 is a schematic diagram of another structure of another communication apparatus according to an embodiment of this application;
FIG. 9 is a schematic diagram of a structure of still another communication apparatus according to an embodiment of this application; and
FIG. 10 is a schematic diagram of another structure of still another communication apparatus according to an embodiment of this application.

### DESCRIPTION OF EMBODIMENTS

To make objectives, technical solutions, and advantages of embodiments of this application clearer, the following further describes the embodiments of this application in detail with reference to the accompanying drawings.

Technical solutions of the embodiments of this application may be used in various communication systems, such as a global system for mobile communications (global system for mobile communications, GSM), a code division multiple access (code division multiple access, CDMA) system, a wideband code division multiple access (wideband code division multiple access, WCDMA) system, a general packet radio service (general packet radio service, GPRS) system, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunication system, UMTS), a worldwide interoperability for microwave access (worldwide interoperability for microwave access, WIMAX) communication system, and a 5th generation (5th generation, 5G) system or a new radio (new radio, NR) system, or is used in a future communication system or another similar communication system.

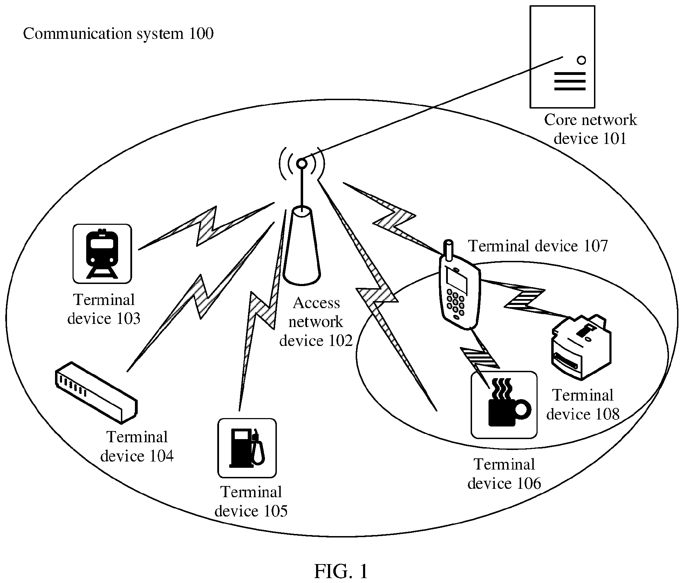

FIG. 1 is a schematic diagram of a network architecture of a communication system to which an embodiment of this application is applicable. The communication system 100 includes a core network device 101, an access network device 102, a terminal device 103, a terminal device 104, a terminal device 105, a terminal device 106, a terminal device 107, and a terminal device 108. The access network device 102 may communicate with at least one terminal device (for example, the terminal device 103) through an uplink (uplink, UL) and a downlink (downlink, DL).

The core network device 101 may include an access and mobility management function (core access and mobility management function, AMF) and/or a user plane function (user plane function, UPF). The AMF is mainly used for access management and mobility management of the terminal device, for example, user equipment (user equipment, UE) registration, UE mobility management, NAS connection, access authentication and authorization, and providing transmission for the UE and an SMF. The UPF is mainly used for service processing on a user plane, for example, data packet routing and transmission, packet detection, service usage reporting, quality of service (quality of service, QoS) processing, lawful interception, uplink packet detection, and downlink data packet storage. The core network device 101 may further include another network element or network function. This is not limited in this application. In addition, the foregoing network element or network function may be a network element in a hardware device, may be a software function running on dedicated hardware, or may be a virtualization function instantiated on a platform (for example, a cloud platform). This is also not limited in this application.

The access network device 102 (also referred to as a radio access network (radio access network, RAN) device) is a device that provides a wireless communication function for the terminal. The access network device may be configured to: mutually convert a received over-the-air frame and an internet protocol (IP) packet, and serve as a router between the terminal device and a rest part of an access network, where the rest part of the access network may include an IP network. The access network device may further coordinate attribute management of an air interface. The access network device includes but is not limited to: a next generation NodeB (gNodeB, gNB) in 5G, 6G, or even 7G, an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB, or a home NodeB, HNB), a baseband unit (baseband unit, BBU), a transmission reception point (transmitting and receiving point, TRP), a transmission point (transmitting point, TP), a mobile switching center, and the like.

It should be understood that the access network device corresponds to different devices in different systems. For example, the access network device may correspond to an eNB in a 4th generation mobile communication technology (4^{th} generation, 4G) system, and correspond to a 5G access network device, for example, a gNB, in a 5G system. The technical solutions provided in the embodiments of this application may also be used in a future mobile communication system, for example, a 6G or 7G system. Therefore, the network device in FIG. 1 may also correspond to an access network device in the future mobile communication system.

The terminal device (also referred to as UE) is a device having a wireless transceiver function. The terminal device may be deployed on land, including an indoor device, an outdoor device, a handheld device, or a vehicle-mounted device; or may be deployed on a water surface (for example, on a ship); or may be deployed in the air (for example, on a plane, a balloon, or a satellite). The terminal may be a mobile phone (mobile phone), a tablet (pad), a computer with the wireless transceiver function, a virtual reality (virtual reality, VR) terminal, an augmented reality (augmented reality, AR) terminal, a wireless terminal in industrial control (industrial control), a wireless terminal in self driving (self driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), or the like. The terminal device may be used in but is not limited to a 5G, 6G, or even 7G communication system.

As an example instead of a limitation, in the embodiments of this application, the terminal device may alternatively be a wearable device. The wearable device may also be referred to as a wearable intelligent device, an intelligent wearable device, or the like, and is a general term of wearable devices that are intelligently designed and developed for daily wear by using a wearable technology, for example, glasses, gloves, watches, clothes, and shoes. The wearable device is a portable device that is directly worn on a body or integrated into clothes or an accessory of a user. The wearable device is more than a hardware device, and implements powerful functions through software support, data exchange, and cloud interaction. In a broad sense, the wearable intelligent device includes full-featured and large-sized devices that can implement all or some functions without depending on smartphones, for example, smart watches or smart glasses, and devices that focus on only one type of application function and need to work with other devices such as smartphones, for example, various smart bands, smart helmets, or smart jewelry for monitoring physical signs.

The terminal device in the embodiments of this application may alternatively be a built-in vehicle-mounted module, vehicle-mounted module, vehicle-mounted component, vehicle-mounted chip, or vehicle-mounted unit with which a vehicle is equipped and that is used as one or more components or units. The vehicle may use the built-in vehicle-mounted module, vehicle-mounted module, vehicle-mounted component, vehicle-mounted chip, or vehicle-mounted unit to implement the method in this application.

The terminal device in the embodiments of this application may alternatively be a terminal device having a dual-SIM dual-standby (dual-SIM dual-standby, DSDS) function. Dual SIM dual standby means that two SIM cards may be inserted into one terminal device, and both the two SIM cards can work normally. The two SIM cards may belong to a same operator or different operators, and may belong to a same communication standard or different communication standards. This is not limited in this application. Based on different transceiver capabilities of terminal devices, the terminal devices may be classified into the following three types:
(1) A dual-reception dual-transmission (Dual RX/Tx) terminal device is a terminal device having two receiver circuits and two transmitter circuits, and the terminal device can simultaneously receive and send data corresponding to two SIM cards.
(2) A dual-reception single-transmission (Dual Rx/Single Tx) terminal device is a terminal device having two receiver circuits and one transmitter circuit, and the terminal device can simultaneously receive data corresponding to two SIM cards, but can send data of only one SIM card at a time.
(3) A single-reception single-transmission (Single Rx/Tx) terminal device is a terminal device having one receiver circuit and one transmitter circuit, and the terminal device can simultaneously receive and send data corresponding to only one SIM card.

It should be understood that there may be a plurality of access network devices in the communication system 100, and each access network device may provide services for a plurality of terminal devices. A quantity of access network devices and a quantity of terminal devices in the communication system are not limited in the embodiments of this application. The access network device in FIG. 1 and each terminal device in some or all of the plurality of terminal devices may implement the technical solutions provided in the embodiments of this application. In addition, the terminal devices in FIG. 1 may be different types of terminal devices, for example, may include terminal devices in massive machine-type communications (massive machine type of communication, mMTC), such as a mobile phone, and a smart water meter and an electricity meter in the internet of things. The various types of terminal devices shown in FIG. 1 are merely some examples. It should also be understood that the terminal device in the embodiments of this application is not limited thereto.

It should be further understood that the terms "system" and "network" may be used interchangeably in the embodiments of this application. "A plurality of' means two or more. In view of this, "a plurality of" may also be understood as "at least two" in the embodiments of this application. "At least one" may be understood as one or more, for example, one, two, or more. For example, "including at least one" means including one, two, or more, and does not limit which items are included. For example, if at least one of A, B, and C is included, A, B, C, A and B, A and C, B and C, or A, B, and C may be included. Similarly, understanding of descriptions such as "at least one type" is similar. The term "and/or" describes an association relationship for describing associated objects and represents that three relationships may exist. For example, A and/or B may represent the following three cases: Only A exists, both A and B exist, and only B exists. In addition, the character "/", unless otherwise specified, usually indicates an "or" relationship between the associated objects.

Unless otherwise stated, ordinal numbers such as "first" and "second" in the embodiments of this application are used to distinguish between a plurality of objects, but are not intended to limit a sequence, a time sequence, priorities, or importance of the plurality of objects. In addition, descriptions of "first" and "second" do not necessarily indicate that objects are different.

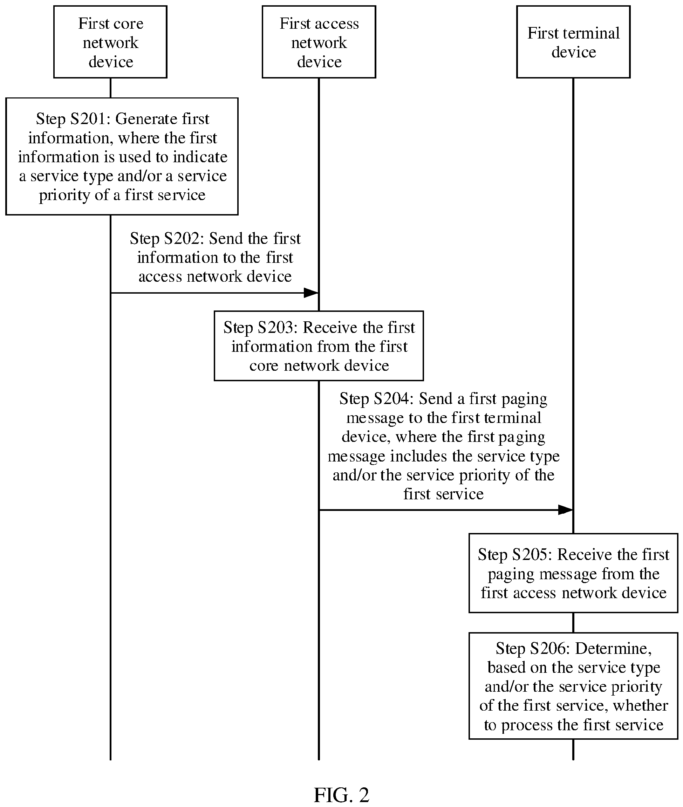

FIG. 2 is a schematic flowchart of a communication method according to an embodiment of this application. The method may include the following step S201 to step S206.

Step S201: A first core network device generates first information, where the first information is used to indicate a service type and/or a service priority of a first service.

The first core network device may generate the first information when or after determining that a first service of a first terminal device arrives at a core network, where arriving at the core network by the first service may be arriving at the first core network device or a second core network device. The first service is a service of the first terminal device, and the first terminal device is currently in an RRC inactive state. For example, the first service may be a voice service, a video service, a multimedia service, a data service, or the like of the first terminal device. It should be understood that a service type of a service of a terminal device is not specifically limited in this embodiment of this application. The first service may alternatively be a service of another type, and descriptions of a second service described below are similar to this.

Specifically, the first information may be included in a first message, and the first message may be used to indicate a first access network device to page the first terminal device. To be specific, after generating the first information, the first core network device may send the first access network device the first message including the first information. That is, step S202 may alternatively be: The first core network device sends the first message to the first access network device, where the first message includes the first information. The first message may further include non-access stratum (non-access stratum, NAS) information used to indicate the first service. The first message may be referred to as a first paging indication message, or may have another name. This is not limited in this application.

In a possible design, the first core network device may be an AMF.

Step S202: The first core network device sends the first information to the first access network device, where the first access network device is an anchor (anchor) access network device of the first terminal device.

The anchor access network device is an access network device accessed by the first terminal device before the first terminal device enters an RRC connected state. In this embodiment of this application, the first terminal device is in the RRC connected state before entering the RRC inactive state. Therefore, the anchor access network device may alternatively be understood as an access network device accessed by the first terminal device when the first terminal device is in the RRC connected state last time. For example, if the access network device is a base station, the first access network device may be an anchor base station of the first terminal device.

Step S203: The first access network device receives the first information from the first core network device.

Step S204: The first access network device sends a first paging message to the first terminal device, where the first paging message includes the service type and/or the service priority of the first service.

It should be noted that, when the first terminal device switches from the RRC connected state to the RRC inactive state last time, the first access network device may further send an RRC connection release message or an RRC connection suspending message to the first terminal device. The RRC connection release message or the RRC connection suspending message may include information used to indicate a first RNA area. The first RNA area is used to support mobility of the first terminal device in the RRC inactive state, and the first RNA area may be specifically a first radio access network-based notification area (RAN-based notification area, RNA) area. After the first terminal device enters the RRC inactive state, the first terminal device may continue using a reserved transmission resource or transmission resource pool when moving and performing cell reselection in the first RNA area.

Considering that the first terminal device is currently in the RRC inactive state, the first access network device may further send a second message to a second access network device, where the second message includes information used to indicate the service type and/or the service priority of the first service, and the information may be, for example, the first information. The second message is used to indicate the second access network device to send a second paging message to the first terminal device, where the second paging message includes information used to indicate the service type and/or the service priority of the first service, and the information may also be, for example, the first information. The second message may be referred to as a second paging indication message, or may have another name. This is not limited in this application. It should be understood that the second access network device and the first access network device are located in a same RNA area. That is, the second access network device may be an access network device other than the first access network device in the first RNA area corresponding to the first terminal device.

In this embodiment of this application, there may be one or more second access network devices. To be specific, after receiving the first message from the first core network device, the first access network device may send the second message to one or more other access network devices in the first RNA area, where the second message includes the first information used to indicate the service type and/or the service priority of the first service, so that the other access network devices in the first RNA area each send a paging message to the first terminal device, and include the service type and/or the service priority of the first service in the paging message. Optionally, the first access network device may send the second message to all other access network devices in the first RNA area corresponding to the first terminal device, so that all access network devices in the RNA area each can send a paging message to the first terminal device, and include the service type and/or the service priority of the first service in the paging message.

Step S205: The first terminal device receives the first paging message from the first access network device. Further, the first terminal device is in the RRC inactive state.

In this embodiment of this application, the first terminal device may further receive the second paging message from the second access network device. It may be understood that, because one or more access network devices in the first RNA area corresponding to the first terminal device each may send a paging message to the first terminal device, the paging message actually received by the first terminal device may be the first paging message sent by the first access network device, or may be the second paging message sent by the second access network device (that is, the paging message sent by another access network device in the first RNA area). In addition, both the first paging message and the second paging message include the information used to indicate the service type and/or the service priority of the first service, and the information may be, for example, the first information.

Step S206: The first terminal device determines, based on the service type and/or the service priority of the first service, whether to process the first service.

In this embodiment of this application, the service type and/or the service priority of the first service may be understood as a paging cause value for an access network device to page the first terminal device, and the first terminal device may determine, based on the paging cause value, whether to process the first service. For example, if the first terminal device is not currently processing another service, the first terminal device may directly determine that the first service needs to be processed. If the first terminal device is currently processing another service, for example, the service may be the second service, the first terminal device may determine, based on the service type and/or the service priority of the first service and a service type and/or a service priority of the second service being processed, whether the first service needs to be processed. That the first terminal device determines whether to process the first service may be understood as that the first terminal device determines whether to allow the first service. After determining to allow the first service, the first terminal device may establish an RRC connection to the first access network device or the second access network device, and receive data of the first service from the first access network device or the second access network device.

In a possible design, the first terminal device may have two identifiers: a first identifier and a second identifier. The first service may be associated with the first identifier of the first terminal device, and the second service may be associated with the second identifier of the first terminal device. In this way, that the first terminal device is in the RRC inactive state means that an RRC state that is associated with the first identifier and that is of the first terminal device is the RRC inactive state. The first access network device is an access network device accessed when the RRC state associated with the first identifier of the first terminal device last time is the RRC connected state. The second access network device is an access network device other than the first access network device in a first RNA area corresponding to the first identifier of the first terminal device. That the first terminal device is currently processing the second service may represent that an RRC state that is associated with the second identifier and that is of the first terminal device is the RRC connected state. In addition, after determining that the first service associated with the first identifier of the first terminal device arrives, the first core network device triggers the first access network device to send the first paging message and the second access network device to send the second paging message. Therefore, in addition to the service type and/or the service priority of the first service, the first paging message and the second paging message each may further include the first identifier associated with the first service, to represent that the first paging message and the second paging message are paging for the first identifier of the first terminal device.

In other words, the first terminal device may be a terminal device supporting dual SIM dual standby. The first terminal device may include two SIM cards. A SIM card 1 corresponds to the first identifier, and a SIM card 2 corresponds to the second identifier. The first service may be a service on the SIM card 1 of the first terminal device, and the second service may be a service on the SIM card 2 of the first terminal device. In this way, that the first terminal device is in the RRC inactive state means that the SIM card 1 of the first terminal device is currently in the RRC inactive state, that is, the RRC state that is associated with the first identifier and that is of the first terminal device is an RRC state corresponding to the SIM card 1 of the first terminal device. The first access network device is an access network device accessed when the SIM card 1 of the first terminal device is in the RRC connected state last time. The second access network device is an access network device other than the first access network device in a first RNA area corresponding to the SIM card 1 of the first terminal device. That the first terminal device is currently processing the second service may represent that the SIM card 2 of the first terminal device is currently in the RRC connected state, that is, the RRC state that is associated with the second identifier and that is of the first terminal device is an RRC state corresponding to the SIM card 2 of the first terminal device. Moreover, in addition to the service type and/or the service priority of the first service, the first paging message sent by the first access network device and the second paging message sent by the second access network device each may further include the first identifier of the first terminal device, to represent that the first paging message and the second paging message are paging for the SIM card 1 of the first terminal device.

Specifically, the first identifier and the second identifier may be identifiers allocated by the core network to the SIM card 1 and the SIM card 2 of the first terminal device, for example, temporary mobile subscriber identities (temporary mobile subscriber identities, TMSIs), 5G network temporary mobile subscriber identities (5G temporary mobile subscriber identities, 5G-TMSIs), or international mobile subscriber identities (international mobile subscriber identities, IMSIs). The first identifier and the second identifier may alternatively be identifiers allocated by an access network to the SIM card 1 and the SIM card 2 of the first terminal device, for example, cell radio network temporary identifiers (cell radio network temporary identifiers, C-RNTIs).

Specifically, the first terminal device is currently processing the second service. After receiving the first paging message or the second paging message, if the first terminal device determines that the service priority of the first service is higher than the service priority of the second service, the first terminal device may determine that the first service needs to be processed, and suspend the second service. Alternatively, after receiving the first paging message or the second paging message, the first terminal device may send prompt information, where the prompt information is used to indicate the service type of the first service. Subsequently, the first terminal device may obtain response information of a user for the prompt information, and determine, based on the response information, whether to process the first service. If the user indicates, by using the response information, to process the first service, the first terminal device may determine that the first service needs to be processed, and suspend the second service. If the user indicates, by using the response information, not to process the first service, or the first terminal device does not obtain the response information for the prompt information within a specified time period, the first terminal device may determine not to process the first service. For example, the first terminal device may display a service type of a newly arrived first service to the user on a display screen, and set two buttons on the display screen, where the two buttons respectively correspond to two options "Yes" and "No", and the user manually selects whether to process the first service.

In this embodiment of this application, after determining that the first service needs to be processed, the first terminal device further needs to respond to a received paging message. Specifically, if the first terminal device receives the first paging message sent by the first access network device, after determining that the first service needs to be processed, the first terminal device may initiate a random access process to the first access network device, to access a network and respond to paging. Further, the first access network device may establish an RRC connection to the first terminal device, and after establishing the RRC connection to the first terminal device, the first access network device may send the first terminal device NAS information used to indicate the first service. Subsequently, the first access network device may further send the data of the first service to the first terminal device.

If the first terminal device receives the second paging message sent by the second access network device, after determining that the first service needs to be processed, the first terminal device may initiate a random access process to the second access network device, to access a network and respond to paging. The first access network device may further send the second access network device NAS information used to indicate the first service. After establishing an RRC connection to the first terminal device, the second access network device may send the NAS information to the first terminal device. Subsequently, the second access network device may further send the data of the first service to the first terminal device.

Further, optionally, if the first terminal device determines not to process the first service, the first terminal device does not initiate a random access process to the first access network device or the second access network device.

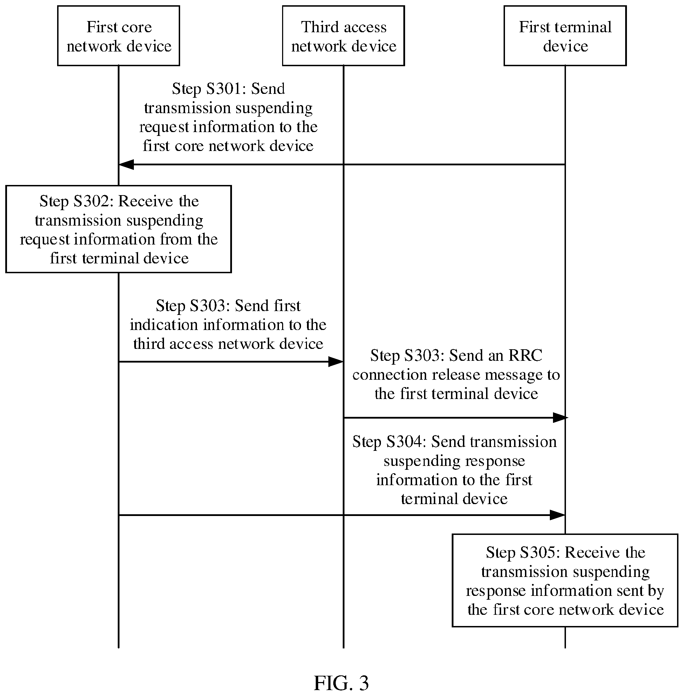

It should be noted that the first terminal device in this embodiment of this application may be a terminal device having a single transmission capability. Therefore, when determining to process the first service, if the first terminal device needs to respond to the first paging message or the second paging message, the first terminal device needs to suspend the second service currently being processed. Optionally, the first terminal device may suspend the second service by using a method shown in FIG. 3.

FIG. 3 is a schematic flowchart of another communication method according to an embodiment of this application. The method may include the following step S301 to step S305.

Step S301: A first terminal device sends transmission suspending request information to a first core network device, where the transmission suspending request information includes a second identifier of the first terminal device, the transmission suspending request information is used to request to suspend a second service of the first terminal device, and the second service is associated with the second identifier of the first terminal device.

In this embodiment of this application, the first terminal device has two identifiers: a first identifier and the second identifier. It may be understood that the first terminal device is a terminal device supporting a dual-SIM dual-standby function. The terminal device includes two SIM cards. A SIM card 1 corresponds to the first identifier, and a SIM card 2 corresponds to the second identifier. Correspondingly, the first terminal device may have two RRC states. One RRC state is associated with the first identifier of the first terminal device and is an RRC state of the SIM card 1, and the other RRC state is associated with the second identifier of the first terminal device and is an RRC state of the SIM card 2. Because the transmission suspending request information sent by the first terminal device is used to request to suspend the second service associated with the second identifier, it may be understood that currently, an RRC state that is associated with the second identifier and that is of the first terminal device may be an RRC connected state, that is, the SIM card 2 is in the RRC connected state, and an RRC state that is associated with the first identifier and that is of the first terminal device may be an RRC inactive state, that is, the SIM card 1 may be in the RRC inactive state.

Specifically, the first identifier and the second identifier may be identifiers allocated by a core network to the SIM card 1 and the SIM card 2 of the first terminal device, for example, temporary mobile subscriber identities (temporary mobile subscriber identities, TMSIs), 5G network temporary mobile subscriber identities (5G temporary mobile subscriber identities, 5G-TMSIs), or international mobile subscriber identities (international mobile subscriber identities, IMSIs). The first identifier and the second identifier may alternatively be identifiers allocated by an access network to the SIM card 1 and the SIM card 2 of the first terminal device, for example, cell radio network temporary identifiers (cell radio network temporary identifiers, C-RNTIs).

In a possible design, the first core network device may be an AMF.

Step S302: The first core network device receives the transmission suspending request information from the first terminal device.

Step S303: The first core network device sends first indication information to a third access network device, where the first indication information is used to indicate to release the RRC state that is associated with the second identifier and that is of the first terminal device to an RRC idle state or the RRC inactive state.

The third access network device is an access network device accessed by the second identifier of the first terminal device, that is, an access network device accessed by the SIM card 2. After receiving the first indication information, the third access network device may send an RRC connection release message or an RRC connection suspending message to the first terminal device, where the RRC connection release message or the RRC connection suspending message includes the second identifier of the first terminal device, and is used to release the RRC state that is associated with the second identifier and that is of the first terminal device to the RRC idle state or the RRC inactive state, that is, release the SIM card 2 of the first terminal device to the RRC idle state or the RRC inactive state. It should be understood that the third access network device and a first access network device may be a same access network device, or may be different access network devices. This is not limited in this application. Herein, the first access network device is an anchor access network device associated with the first identifier of the first terminal device, that is, an access network device accessed when the SIM card 1 of the first terminal device is in the RRC connected state last time.

In addition, the first core network device may further send second indication information to a second core network device, where the second indication information is used to indicate second core network device to stop sending data of the second service to the third access network device. In this way, after receiving the second indication information, the second core network device may stop sending the second indication information to the third access network device, so that the second service is suspended on a network side. In a possible design, the second core network device may be a UPF.

Step S304: The first core network device sends transmission suspending response information to the first terminal device, where the transmission suspending response information includes the second identifier, and the transmission suspending response information is used to indicate to the first terminal device that the second service has been suspended. Optionally, after receiving the transmission suspending request information sent by the first terminal device, the first core network device may send the transmission suspending response information to the first terminal device. Alternatively, the first core network device may send the transmission suspending response information to the first terminal device after sending the first indication information to the third access network device and/or sending the second indication information to the second core network device. This is not limited in this application.

Step S305: The first terminal device receives the transmission suspending response information sent by the first core network device.

In this embodiment of this application, when determining that the second service needs to be suspended, the first terminal device may send the transmission suspending request information to the first core network device. The second service may need to be suspended because the first terminal device is a terminal device having a single transmission capability. In a process of processing the second service, the first terminal device receives a first paging message from the first access network device or a second paging message from a second access network device, where the first paging message or the second paging message is paging for the first identifier of the first terminal device, that is, paging for the SIM card 1 of the first terminal device. In addition, a service priority of the first service indicated in the first paging message and the second paging message is higher than a service priority of the second service, or after receiving the first paging message or the second paging message, the first terminal device obtains response information indicating that a user determines to process the first service.

Optionally, after suspending the second service, the first terminal device may further recover the second service. For example, the third access network device may send transmission recovery request information to the first core network device, where the transmission recovery request information includes the second identifier, and is used to request to recover the second service associated with the second identifier. After receiving the transmission recovery request information, the first core network device may send fifth indication information to the second core network device, where the fifth indication information is used to indicate the second core network device to recover sending data of the second service to the third access network device. The first core network device may further send transmission recovery response information to the third access network device. After receiving the transmission recovery request information, the first core network device may send the transmission recovery response information to the third access network device. Alternatively, after sending the fifth indication information to the second core network device, the first core network device may send the transmission recovery response information to the third access network device. This is not limited in this application. In addition, after receiving the transmission recovery response information, the third access network device may further send an RRC connection establishment message or an RRC connection recovery message to the first terminal device, to switch the RRC state that is associated with the second identifier and that is of the first terminal device to the RRC connected state.

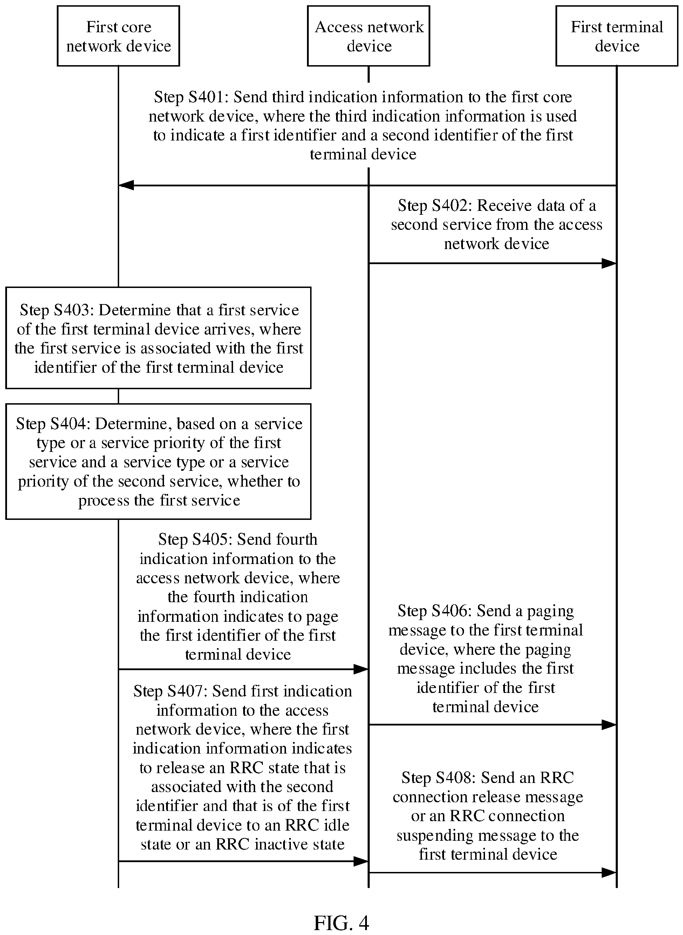

FIG. 4 is a schematic flowchart of still another communication method according to an embodiment of this application. The method may include the following step S401 step S406.

Step S401: A first terminal device sends third indication information to a first core network device, where the third indication information is used to indicate a first identifier and a second identifier of the first terminal device.

In this embodiment of this application, the first terminal device is a terminal device supporting a dual-SIM dual-standby function. The terminal device includes two SIM cards. A SIM card 1 corresponds to the first identifier, and a SIM card 2 corresponds to the second identifier. Correspondingly, the first terminal device may have two RRC states. One RRC state is associated with the first identifier of the first terminal device and is an RRC state of the SIM card 1, and the other RRC state is associated with the second identifier of the first terminal device and is an RRC state of the SIM card 2. By sending the first identifier and the second identifier to the first core network device, the first core network device may confirm that the first identifier and the second identifier are actually identifiers of a same terminal device entity, that is, both the SIM card 1 and the SIM card 2 are SIM cards in the first terminal device. In this way, the first core network device may bind or associate the SIM card 1 with the SIM card 2 from a network side.

Specifically, the first identifier and the second identifier may be identifiers allocated by a core network to the SIM card 1 and the SIM card 2 of the first terminal device, for example, temporary mobile subscriber identities (temporary mobile subscriber identities, TMSIs), 5G network temporary mobile subscriber identities (5G temporary mobile subscriber identities, 5G-TMSIs), or international mobile subscriber identities (international mobile subscriber identities, IMSIs). The first identifier and the second identifier may alternatively be identifiers allocated by an access network to the SIM card 1 and the SIM card 2 of the first terminal device, for example, cell radio network temporary identifiers (cell radio network temporary identifiers, C-RNTIs).

Further, the first terminal device may alternatively be a terminal device having a single transmission capability. In this case, the third indication information may further include capability information of the first terminal device, and the capability information is used to indicate that sending transmission capability of the first terminal device is single transmission. Therefore, the first core network device may determine, from the network side based on the first identifier and the second identifier of the first terminal device and with reference to the single transmission capability of the first terminal device, whether to process a service associated with an identifier.

In a possible design, the first core network device may be an AMF. The SIM card 1 and the SIM card 2 of the first terminal device may belong to a same operator, or both register with the same AMF.

Step S402: The first terminal device receives data of a second service from an access network device, where the second service is associated with the second identifier of the first terminal device, and an RRC state that is associated with the second identifier and that is of the first terminal device is an RRC connected state.

That the second service is associated with the second identifier of the first terminal device may represent that the second service is a service of the SIM card 2 of the first terminal device. That the first terminal device receives, from the access network device, the data of the second service associated with the second identifier may represent that the first terminal device is processing the second service, and currently, an RRC state that is associated with the second identifier and that is of the first terminal device is the RRC connected state, that is, the SIM card 2 of the first terminal device is currently in the RRC connected state. Correspondingly, the access network device is an access network device accessed by the second identifier of the first terminal device, that is, an access network device currently accessed by the SIM card 2 in the first terminal device.

Step S403: The first core network device determines that a first service of the first terminal device arrives, where the first service is associated with the first identifier of the first terminal device, and an RRC state that is associated with the first identifier and that is of the first terminal device is an RRC inactive state or an RRC idle state.

That the first service is associated with the first identifier of the first terminal device may be understood as that the first service is a service of the SIM card 1 of the first terminal device. That currently, an RRC state that is associated with the first identifier and that is of the first terminal device is the RRC inactive state or the RRC idle state may be understood as that the SIM card 1 of the first terminal device is currently in the RRC inactive state or the RRC idle state.

Step S404: The first core network device determines, based on a service type or a service priority of the first service and a service type or a service priority of the second service, whether to process the first service.

In a possible design, if the service priority of the first service is higher than the service priority of the second service, the first core network device may determine to process the first service, and suspend the second service. In this embodiment of this application, the first core network device may prestore a service priority of each service type. Alternatively, the first core network device may receive service priority information from the first terminal device, where the service priority information includes a service priority of a service of at least one service type of the first terminal device. In this way, different terminal devices may set different service priorities for services of various service types, to effectively improve service processing flexibility and improve user experience.

If the first core network device determines to process the first service, the first core network device may trigger paging for the first identifier of the first terminal device, suspend the first service that is associated with the second identifier and that is of the first terminal device, and release the RRC state that is associated with the second identifier and that is of the first terminal device to the RRC inactive state or the RRC idle state.

Specifically, in step S405, the first core network device may send fourth indication information to the access network device, where the fourth indication information is used to indicate the access network device to page the first identifier of the first terminal device, that is, page the SIM card 1 of the first terminal device. After receiving the fourth indication information, the access network device may carry the first identifier of the first terminal device in a paging message, and send the paging message to the first terminal device in step S406. After the first terminal device responds to the paging message and establishes an RRC connection to the access network device, the RRC state that is associated with the first identifier and that is of the first terminal device may switch from the RRC inactive state to the RRC connected state, that is, the SIM card 1 of the first terminal device enters the RRC connected state. Subsequently, the first terminal device may further receive data of the first service from the access network device. It may be understood that, in this embodiment of this application, the first terminal device may be connected to a same access network device by using the first identifier (that is, an identifier corresponding to the SIM card 1) and the second identifier (that is, an identifier corresponding to the SIM card 2).

In step S407, the first core network device may further send first indication information to the access network device, where the first indication information is used to indicate the access network device to release the RRC state that is associated with the second identifier and that is of the first terminal device from the RRC connected state to the RRC idle state or the RRC inactive state. After receiving the first indication information, the access network device may carry the second identifier of the first terminal device in an RRC connection release message or an RRC connection suspending message, and send the RRC connection release message or the RRC connection suspending message to the first terminal device in step S408. In addition, the first core network device may further send second indication information to a second core network device, where the second indication information is used to indicate the second core network device to stop sending data of the second service to the access network device. In a possible design, the second core network device may be a UPF.

It should be understood that an execution sequence of step S401 to step S408 is not specifically limited in this embodiment of this application, and an execution sequence of the steps is based on an internal logic limitation. For example, step S401 may be performed before step S402, or may be performed synchronously with step S402, or may be performed after step S402. This is not limited. Step S402 may be performed before step S403, step S401 may be performed before step S403, and step S403 may be performed before step S404. Step S405 may be performed before step S407, or may be performed after step S407. This is not limited.

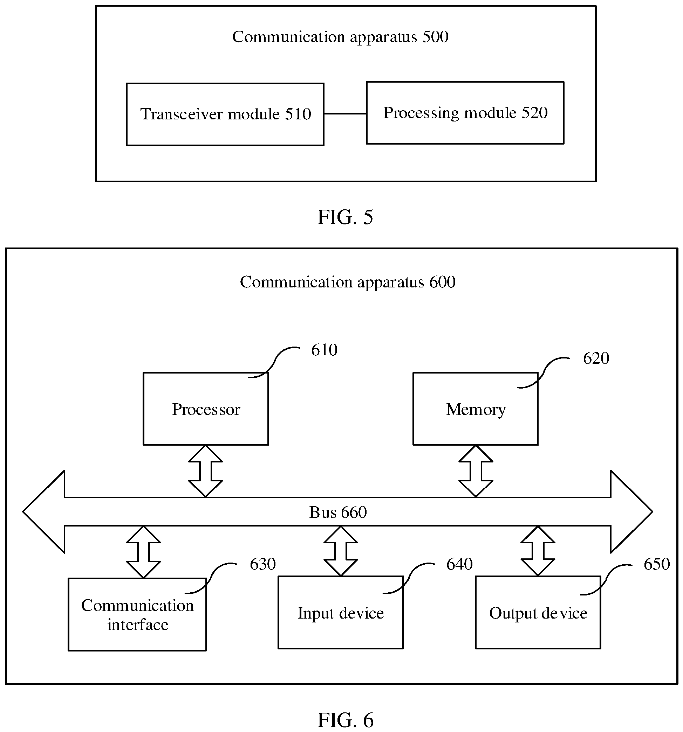

An embodiment of this application provides a communication apparatus. FIG. 5 is a schematic diagram of a structure of a communication apparatus according to an embodiment of this application. The communication apparatus 500 includes a transceiver module 510 and a processing module 520. The communication apparatus may be configured to implement a function of the first core network device in any one of the foregoing method embodiments. For example, the communication apparatus may be an AMF network element in a core network, or another network function having an access and mobility management function. The network element or network function may be a network element in a hardware device, may be a software function running on dedicated hardware, or may be a virtualization function instantiated on a platform (for example, a cloud platform).

When the communication apparatus is used as a first core network device and performs the method shown in FIG. 2, the processing module 520 is configured to generate first information, where the first information is used to indicate a service type and/or a service priority of a first service, and the first service is a service of a first terminal device in an RRC inactive state. The transceiver module 510 is configured to send the first information to a first access network device, where the first access network device is an anchor access network device of the first terminal device.

In a possible design, the first information is included in a first message, the first message further includes NAS information, and the NAS information is used to indicate the first service.

When the communication apparatus is used as a first core network device and performs the method shown in FIG. 3, the transceiver module 510 is configured to receive transmission suspending request information from a first terminal device, where the transmission suspending request information includes a second identifier of the first terminal device, the transmission suspending request information is used to request to suspend a second service of the first terminal device, and the second service is associated with the second identifier. The processing module 520 is configured to send first indication information to a third access network device by using the transceiver module 510, where the first indication information is used to indicate to release an RRC state that is associated with the second identifier and that is of the first terminal device to an RRC idle state or an RRC inactive state.

In a possible design, the transceiver module 510 is further configured to send second indication information to a second core network device, where the second indication information is used to indicate the second core network device to stop sending data of the second service to third access network device.

In a possible design, the transceiver module 510 is further configured to send transmission suspending response information to the first terminal device, where the transmission suspending response information includes the second identifier, and the transmission suspending response information is used to indicate that the second service has been suspended.

When the communication apparatus is used as a first core network device and performs the method shown in FIG. 4, the transceiver module 510 is configured to receive third indication information from a first terminal device, where the third indication information is used to indicate a first identifier and a second identifier of the first terminal device. The processing module 520 is configured to: determine that a first service of the first terminal device arrives, where the first service is associated with the first identifier, and an RRC state that is associated with the first identifier and that is of the first terminal device is an RRC inactive state or an RRC idle state; and determine, based on a service type or a service priority of the first service and a service type or a service priority of a second service, whether to process the first service, where the second service is associated with the second identifier.

In a possible design, the third indication information may further include capability information of the first terminal device, and the capability information is used to indicate that a transmission capability of the first terminal device is single transmission.

In a possible design, if determining to process the first service, the transceiver module 510 is further configured to send fourth indication information to an access network device, where the fourth indication information is used to indicate the access network device to page the first identifier of the first terminal device.

In a possible design, if determining to process the first service, the transceiver module 510 is further configured to send first indication information to an access network device, where the first indication information is used to indicate to release an RRC state that is associated with the second identifier and that is of the first terminal device to the RRC idle state or the RRC inactive state; and/or the transceiver module 510 is further configured to send second indication information to a second core network device, where the second indication information is used to indicate the second core network device to stop sending data of the second service to the access network device.

In a possible design, the transceiver module 510 is further configured to receive service priority information from the first terminal device, where the service priority information includes a service priority of a service of at least one service type of the first terminal device.

It should be noted that the processing module 520 in the communication apparatus 500 may be implemented by using a processor or a processor-related circuit component, and may be a processor or a processing unit. The transceiver module 510 may be implemented by using a transceiver or a transceiver-related circuit component, and may be a transceiver or a transceiver unit.

FIG. 6 is another schematic diagram of a structure of a communication apparatus according to an embodiment of this application. The communication apparatus 600 includes a processor 610, a memory 620, and a communication interface 630. Optionally, the communication apparatus 600 further includes an input device 640, an output device 650, and a bus 660. The processor 610, the memory 620, the communication interface 630, the input device 640, and the output device 650 are connected to each other through the bus 660. The memory 620 stores instructions or a program, and the processor 610 is configured to execute the instructions or the program stored in the memory 620. When the instructions or the program stored in the memory 620 are/is executed, the processor 610 is configured to perform an operation performed by the processing module 520 in the foregoing method embodiment, and communication interface 530 is configured to perform an operation performed by the transceiver module 510 in the foregoing embodiment.

It should be noted that the communication apparatus 600 provided in this embodiment of this application may correspond to the first core network device that performs the method provided in this embodiment of the present invention, and operations and/or functions of modules in the apparatus 600 are separately used to implement corresponding procedures of the methods shown in FIG. 2 to FIG. 4. For brevity, details are not described herein again.

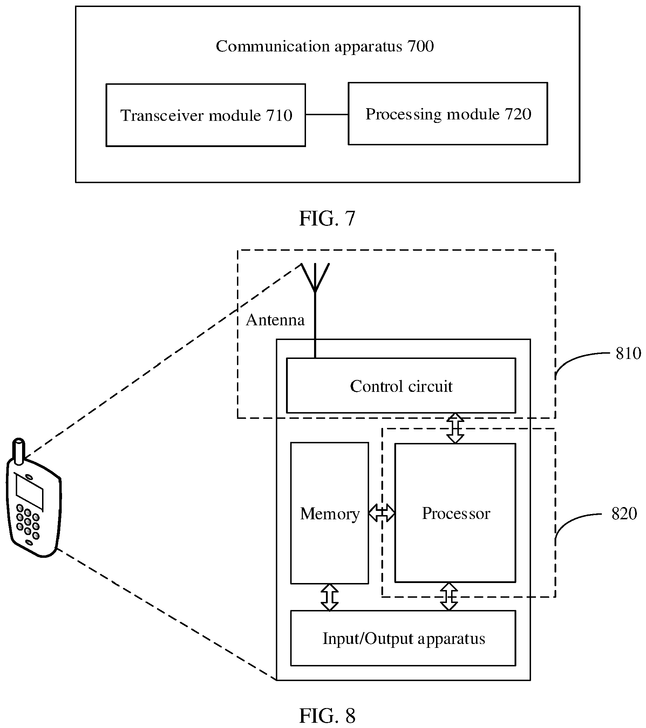

An embodiment of this application provides another communication apparatus. FIG. 7 is a schematic diagram of a structure of a communication apparatus according to an embodiment of this application. The communication apparatus 700 includes a transceiver module 710 and a processing module 720. The communication apparatus may be configured to implement a function of the first terminal device in any one of the foregoing method embodiments. For example, the communication apparatus may be a handheld terminal device, a vehicle-mounted terminal device, or vehicle user equipment, or may be a chip included in a terminal device, or the communication apparatus is a vehicle-mounted apparatus, for example, a built-in vehicle-mounted module or vehicle-mounted unit with which a vehicle is equipped.

When the communication apparatus is used as a first terminal device and performs the method embodiment shown in FIG. 2, the transceiver module 710 is configured to receive a paging message from an access network device, where the paging message includes a service type and/or a service priority of a first service, and the communication apparatus 700 is in an RRC inactive state. The processing module 720 is configured to determine, based on the service type and/or the service priority of the first service, whether to process the first service.

In a possible design, the processing module 720 is further configured to: if determining that the communication apparatus 700 is processing a second service, and the service priority of the first service is higher than a service priority of the second service, suspend the second service, where the first service is associated with a first identifier of the communication apparatus 700, and the second service is associated with a second identifier of the communication apparatus 700.

In a possible design, the processing module 720 is further configured to: if determining that the communication apparatus 700 is processing a second service, send prompt information, where the prompt information is used to indicate the service type of the first service, the first service is associated with a first identifier of the communication apparatus 700, and the second service is associated with a second identifier of the communication apparatus 700. The processing module 720 is further configured to: obtain response information for the prompt information, and determine, based on the response information, whether to process the first service.

In a possible design, after the processing module 720 determines that the communication apparatus 700 processes the first service, the transceiver module 710 is further configured to receive NAS information from the access network device, where the NAS information is used to indicate the first service.

When the communication apparatus is used as a first terminal device and performs the method embodiment shown in FIG. 3, the processing module 720 is configured to send transmission suspending request information to a first core network device by using the transceiver module 710, where the transmission suspending request information includes a second identifier of the communication apparatus 700, the transmission suspending request information is used to request to suspend a second service of the communication apparatus 700, and the second service is associated with the second identifier. The transceiver module 710 is further configured to receive transmission suspending response information sent by the first core network device, where the transmission suspending response information is used to indicate that the second service has been suspended.

In a possible design, the transceiver module 710 is further configured to receive a first paging message from a first access network device, where the first paging message includes a service type and/or a service priority of a first service, the first service is associated with a first identifier of the communication apparatus 700, and an RRC state that is associated with the first identifier and that is of the communication apparatus 700 is an RRC inactive state. The processing module 720 is further configured to determine, based on the service type and/or the service priority of the first service, that the second service needs to be suspended.

In a possible design, the transceiver module 710 is further configured to receive an RRC connection release message from a third access network device, where the RRC connection release message is used to release an RRC state that is associated with the second identifier and that is of the communication apparatus 700 to an RRC idle state or an RRC inactive state.

When the communication apparatus is used as a first terminal device and performs the method embodiment shown in FIG. 4, the transceiver module 710 is configured to send third indication information to a first core network device, where the third indication information is used to indicate a first identifier and a second identifier of the communication apparatus 700. The transceiver module 710 is further configured to receive data of a second service from an access network device, where the second service is associated with the second identifier, and an RRC state that is associated with the second identifier and that is of the communication apparatus 700 is an RRC connected state. The transceiver module 710 is further configured to receive an RRC connection release message from the access network device, where the RRC connection release message is used to release the RRC state that is associated with the second identifier and that is of the communication apparatus 700 to an RRC inactive state or an RRC idle state. The transceiver module 710 is further configured to receive a paging message from the access network device, where the paging message includes the first identifier, and an RRC state that is associated with the first identifier and that is of the communication apparatus 700 is the RRC inactive state. The transceiver module 710 is further configured to receive data of the first service from the access network device, where the first service is associated with the first identifier, and a service priority of the first service is higher than a service priority of the second service.

In a possible design, the third indication information may further include capability information of the communication apparatus 700, and the capability information is used to indicate that a transmission capability of the communication apparatus 700 is single transmission.

In a possible design, the transceiver module 710 is further configured to receive an RRC connection release message from an access network device, where the RRC connection release message is used to release an RRC state that is associated with the second identifier and that is of the communication apparatus 700 to an RRC idle state or an RRC inactive state.

In a possible design, the transceiver module 710 is further configured to send service priority information to the first core network device, where the service priority information includes a service priority of a service of at least one service type of the communication apparatus 700.

The processing module 720 in the communication apparatus may be implemented by using a processor or a processor-related circuit component, and may be a processor or a processing unit. The transceiver module 710 may be implemented by using a transceiver or a transceiver-related circuit component, and may be a transceiver or a transceiver unit.

FIG. 8 is a schematic diagram of another structure of another communication apparatus according to an embodiment of this application. The communication apparatus may be specifically a terminal device. For ease of understanding and illustration, in FIG. 8, a mobile phone is used as an example of the terminal device. As shown in FIG. 8, the terminal device includes a processor, and may further include a memory. In addition, the terminal device may further include a radio frequency circuit, an antenna, an input/output apparatus, and the like. The processor is mainly configured to: process a communication protocol and communication data, control the terminal device, execute a software program, process data of the software program, and the like. The memory is mainly configured to store a software program and data. The radio frequency circuit is mainly configured to: convert a baseband signal and a radio frequency signal, and process the radio frequency signal. The antenna panel is mainly configured to transmit and receive a radio frequency signal in an electromagnetic wave form. The input/output apparatus, such as a touchscreen, a display screen, or a keyboard, is mainly configured to receive data input by a user and output data to the user. It should be noted that some types of terminal devices may have no input/output apparatus.

When data needs to be sent, the processor performs baseband processing on to-be-sent data, and then outputs a baseband signal to a radio frequency circuit. After performing radio frequency processing on the baseband signal, the radio frequency circuit sends a radio frequency signal to the outside by using the antenna in an electromagnetic wave form. When data is sent to the terminal device, the radio frequency circuit receives a radio frequency signal through the antenna, converts the radio frequency signal into a baseband signal, and outputs the baseband signal to the processor. The processor converts the baseband signal into data, and processes the data. For ease of description, FIG. 8 shows only one memory and only one processor. In an actual terminal device product, there may be one or more processors and one or more memories. The memory may also be referred to as a storage medium, a storage device, or the like. The memory may be disposed independent of the processor, or may be integrated with the processor. This is not limited in this embodiment of this application.

In this embodiment of this application, the antenna and the radio frequency circuit that have receiving and sending functions may be considered as a transceiver unit of the terminal device, and the processor that has a processing function may be considered as a processing unit of the terminal device. As shown in FIG. 8, the terminal device includes a transceiver unit 810 and a processing unit 820. The transceiver unit may also be referred to as a transceiver, a transceiver machine, a transceiver apparatus, or the like. The processing unit may also be referred to as a processor, a processing board, a processing module, a processing apparatus, or the like. Optionally, a component that is in the transceiver unit 810 and that is configured to implement a receiving function may be considered as a receiving unit, and a component that is in the transceiver unit 810 and that is configured to implement a sending function may be considered as a sending unit. In other words, the transceiver unit 810 includes the receiving unit and the sending unit. The transceiver unit may also be sometimes referred to as a transceiver machine, a transceiver, a transceiver circuit, or the like. The receiving unit may also be sometimes referred to as a receiver machine, a receiver, a receiver circuit, or the like. The sending unit may also be sometimes referred to as a transmitter machine, a transmitter, a transmitter circuit, or the like. It should be understood that the transceiver unit 810 is configured to perform a sending operation and a receiving operation on a terminal device side in the foregoing method embodiments, and the processing unit 820 is configured to perform an operation other than the receiving and sending operations of the terminal device in the foregoing method embodiments.

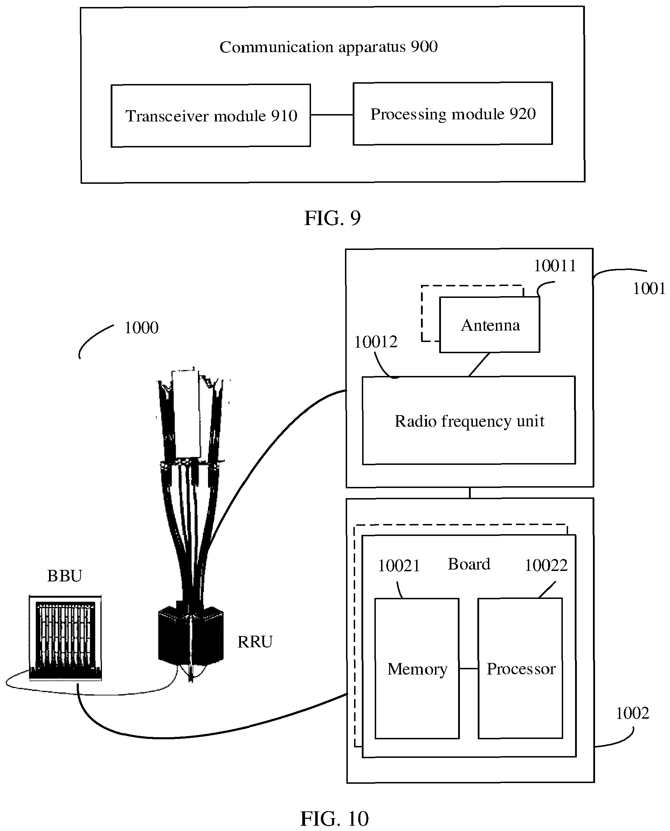

An embodiment of this application provides still another communication apparatus. FIG. 9 is a schematic diagram of a structure of a communication apparatus according to an embodiment of this application. The communication apparatus 900 includes a transceiver module 910 and a processing module 920. The communication apparatus may be configured to implement a function of the access network device in any one of the foregoing method embodiments. For example, the communication apparatus may be a base station or a chip included in the base station.

When the communication apparatus is used as an access network device and performs the method embodiment shown in FIG. 2, the transceiver module 910 is configured to receive first information from a first core network device, where the first information is used to indicate a service type and/or a service priority of a first service, and the first service is a service of a first terminal device in an RRC inactive state. The transceiver module 910 is further configured to send a first paging message to the first terminal device, where the first paging message includes the service type and/or the service priority of the first service.

In a possible design, the communication apparatus 900 is an anchor access network device of the first terminal device.

In a possible design, the transceiver module 910 is further configured to send a second message to a second access network device, where the second message includes the service type and/or the service priority of the first service, the second message is used to indicate the second access network device to send a second paging message to the first terminal device, the second paging message includes the service type and/or the service priority of the first service, and the second access network device and the communication apparatus 900 are located in a same RNA area.

In a possible design, the first information is included in a first message, the first message further includes NAS information, and the NAS information is used to indicate the first service. The transceiver module 910 is further configured to send the NAS information to the first terminal device; or send the NAS information to the second access network device.

The processing module 920 in the communication apparatus may be implemented by using a processor or a processor-related circuit component, and may be a processor or a processing unit. The transceiver module 910 may be implemented by using a transceiver or a transceiver-related circuit component, and may be a transceiver or a transceiver unit.

FIG. 10 is a schematic diagram of another structure of still another communication apparatus according to an embodiment of this application. The communication apparatus 1000 may be specifically an access network device, for example, a base station, configured to implement a function of the access network device in any one of the foregoing method embodiments.

The access network device includes one or more radio frequency units, for example, a remote radio unit (remote radio unit, RRU) 1001 and one or more baseband units (baseband units, BBUs) (which may also be referred to as digital units (digital units, DUs)) 1002. The RRU 1001 may be referred to as a transceiver unit, a transceiver machine, a transceiver circuit, a transceiver, or the like, and may include at least one antenna 10011 and a radio frequency unit 10012. The RRU 1001 is mainly configured to: receive and send a radio frequency signal and convert the radio frequency signal and a baseband signal. The BBU 1002 is mainly configured to: perform baseband processing, control the base station, and the like. The RRU 1001 and the BBU 1002 may be physically disposed together, or may be physically disposed separately, namely, a distributed base station.

The BBU 1002 is a control center of the base station, may also be referred to as a processing unit, and is mainly configured to complete baseband processing functions such as channel coding, multiplexing, modulation, and spectrum spreading. For example, the BBU (the processing unit) 1002 may be configured to control the base station to perform operation procedures related to the access network device in the foregoing method embodiment.

In an example, the BBU 1002 may include one or more boards, and a plurality of boards may jointly support a radio access network (for example, an LTE network) having a single access standard, or may separately support radio access networks (for example, an LTE network, a 5G network, or another network) having different access standards. The BBU 1002 may further include a memory 10021 and a processor 10022, and the memory 10021 is configured to store necessary instructions and data. The processor 10022 is configured to control the base station to perform a necessary action, for example, is configured to control the base station to perform a sending operation in the foregoing method embodiments. The memory 10021 and the processor 10022 may serve one or more boards. In other words, the memory and processor can be separately set on each board. Alternatively, a plurality of boards may share a same memory and a same processor. In addition, a necessary circuit may be further disposed on each board.

An embodiment of this application further provides a chip system, including a processor, where the processor is coupled to a memory. The memory is configured to store a program or instructions. When the program or the instructions is/are executed by the processor, the chip system is enabled to implement the method in any one of the foregoing method embodiments.

Optionally, there may be one or more processors in the chip system. The processor may be implemented by using hardware, or may be implemented by using software. When the processor is implemented by using the hardware, the processor may be a logic circuit, an integrated circuit, or the like. When the processor is implemented by using the software, the processor may be a general-purpose processor, and is implemented by reading software code stored in the memory.

Optionally, there may also be one or more memories in the chip system. The memory may be integrated with the processor, or may be disposed separately from the processor. This is not limited in this application. For example, the memory may be a non-transitory processor, for example, a read-only memory ROM. The memory and the processor may be integrated into a same chip, or may be respectively disposed on different chips. A type of the memory and a manner of disposing the memory and the processor are not specifically limited in this application.

For example, the chip system may be a field programmable gate array (field programmable gate array, FPGA), an application-specific integrated circuit (application-specific integrated circuit, ASIC), a system on chip (system on chip, SoC), a central processing unit (central processing unit, CPU), a network processor (network processor, NP), a digital signal processor (digital signal processor, DSP), a micro controller unit (micro controller unit, MCU), or a programmable logic device (programmable logic device, PLD) or another integrated chip.

It should be understood that steps in the foregoing method embodiment may be implemented by using a hardware integrated logical circuit in the processor or instructions in a form of software. The steps of the method disclosed with reference to the embodiments of this application may be directly performed and completed by a hardware processor, or may be performed and completed by using a combination of hardware in the processor and a software module.

An embodiment of this application further provides a computer-readable storage medium. The computer storage medium stores computer-readable instructions. When a computer reads and executes the computer-readable instructions, the computer is enabled to perform the method in any one of the foregoing method embodiments.

An embodiment of this application further provides a computer program product. When a computer reads and executes the computer program product, the computer is enabled to perform the method in any one of the foregoing method embodiments.

An embodiment of this application further provides a communication system. The communication system includes a first core network device, a first access network device, and a first terminal device. Optionally, the communication system may further include a second core network device.

It should be understood that, the processor mentioned in the embodiments of this application may be a central processing unit (central processing unit, CPU), the processor may further be another general-purpose processor, a digital signal processor (digital signal processor, DSP), an application-specific integrated circuit (application-specific integrated circuit, ASIC), a field programmable gate array (field programmable gate array, FPGA), or another programmable logic device, discrete gate or transistor logic device, discrete hardware component, or the like. The general-purpose processor may be a microprocessor, or the processor may be any conventional processor or the like.

It may be further understood that the memory mentioned in the embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus dynamic random access memory (direct rambus RAM, DR RAM).

It should be noted that when the processor is a general-purpose processor, a DSP, an ASIC, an FPGA or another programmable logic device, a discrete gate or a transistor logic device, or a discrete hardware component, the memory (a storage module) is integrated into the processor.

It should be noted that the memory described in this specification aims to include but is not limited to these memories and any memory of another proper type.

It should be understood that sequence numbers of the foregoing processes do not mean execution sequences in various embodiments of this application. The execution sequences of the processes should be determined based on functions and internal logic of the processes, and should not be construed as any limitation on implementation processes of the embodiments of the present invention.

A person of ordinary skill in the art may be aware that units and algorithm steps in the examples described with reference to the embodiments disclosed in this specification may be implemented by electronic hardware or a combination of computer software and electronic hardware. Whether the functions are performed by hardware or software depends on particular applications and design constraint conditions of the technical solutions. A person skilled in the art may use different methods to implement the described functions of each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of the embodiments.

In addition, function units in the embodiments of this application may be integrated into one processing unit, or each of the units may exist alone physically, or two or more units are integrated into one unit.

When the functions are implemented in a form of a software function unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, or a network device) to perform all or some of the steps of the method described in the embodiments of this application. The foregoing storage medium includes various media that can store program code, for example, a USB flash drive, a removable hard disk, a read-only memory (Read-Only Memory, ROM), a random access memory (Random Access Memory, RAM), a magnetic disk, and an optical disc.

The foregoing descriptions are merely specific implementations of this application, but the protection scope of this application is not limited thereto. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, wherein the method comprises:
generating first information, wherein the first information is used to indicate a service type and/or a service priority of a first service, and the first service is a service of a first terminal device in a radio resource control RRC inactive state; and
sending the first information to a first access network device, wherein the first access network device is an anchor access network device of the first terminal device.

2. The method according to claim 1, wherein the first information is comprised in a first message, the first message further comprises non-access stratum NAS information, and the NAS information is used to indicate the first service.

3. A communication method, wherein the method comprises:
receiving first information from a first core network device, wherein the first information is used to indicate a service type and/or a service priority of a first service, and the first service is a service of a first terminal device in a radio resource control RRC inactive state; and
sending a first paging message to the first terminal device, wherein the first paging message comprises the service type and/or the service priority of the first service.

4. The method according to claim 3, wherein a first access network device is an anchor access network device of the first terminal device.

5. The method according to claim 3, wherein the method further comprises:
sending a second message to a second access network device, wherein the second message comprises the service type and/or the service priority of the first service, the second message is used to indicate the second access network device to send a second paging message to the first terminal device, the second paging message comprises the service type and/or the service priority of the first service, and the second access network device and a first access network device are located in a same RNA area.

6. The method according to claim 4 or 5, wherein the first information is comprised in a first message, the first message further comprises non-access stratum NAS information, and the NAS information is used to indicate the first service; and
the method further comprises:
sending the NAS information to the first terminal device; or sending the NAS information to the second access network device.

7. A communication method, wherein the method comprises:
receiving a paging message from an access network device, wherein the paging message comprises a service type and/or a service priority of a first service, and a first terminal device is in a radio resource control RRC inactive state; and
determining, based on the service type and/or the service priority of the first service, whether to process the first service.

8. The method according to claim 7, wherein the determining, based on the service priority of the first service, whether to process the first service comprises:
if a second service is being processed, and the service priority of the first service is higher than a service priority of the second service, suspending the second service, wherein the first service is associated with a first identifier of the first terminal device, and the second service is associated with a second identifier of the first terminal device.

9. The method according to claim 7, wherein the determining, based on the service type of the first service, whether to process the first service comprises:
if a second service is being processed, sending prompt information, wherein the prompt information is used to indicate the service type of the first service, the first service is associated with a first identifier of the first terminal device, and the second service is associated with a second identifier of the first terminal device; and
obtaining response information for the prompt information, and determining, based on the response information, whether to process the first service.

10. The method according to any one of claims 7 to 9, wherein if it is determined to process the first service, the method further comprises:
receiving non-access stratum NAS information from the access network device, wherein the NAS information is used to indicate the first service.

11. A communication method, wherein the method comprises:
receiving transmission suspending request information from a first terminal device, wherein the transmission suspending request information comprises a second identifier of the first terminal device, the transmission suspending request information is used to request to suspend a second service of the first terminal device, and the second service is associated with the second identifier; and
sending first indication information to a third access network device, wherein the first indication information is used to indicate to release a radio resource control RRC state that is associated with the second identifier and that is of the first terminal device to an RRC idle state or an RRC inactive state.

12. The method according to claim 11, wherein the method further comprises:
sending second indication information to a second core network device, wherein the second indication information is used to indicate the second core network device to stop sending data of the second service to the third access network device.

13. The method according to claim 11 or 12, wherein the method further comprises:
sending transmission suspending response information to the first terminal device, wherein the transmission suspending response information comprises the second identifier, and the transmission suspending response information is used to indicate that the second service has been suspended.

14. A communication method, wherein the method comprises:
sending transmission suspending request information to a first core network device, wherein the transmission suspending request information comprises a second identifier of a first terminal device, the transmission suspending request information is used to request to suspend a second service of the first terminal device, and the second service is associated with the second identifier; and
receiving transmission suspending response information sent by the first core network device, wherein the transmission suspending response information is used to indicate that the second service has been suspended.

15. The method according to claim 14, wherein the method further comprises:
receiving a first paging message from a first access network device, wherein the first paging message comprises a service type and/or a service priority of a first service, the first service is associated with a first identifier of the first terminal device, and a radio resource control RRC state that is associated with the first identifier and that is of the first terminal device is an RRC inactive state; and
determining, based on the service type and/or the service priority of the first service, that the second service needs to be suspended.

16. The method according to claim 14 or 15, wherein the method further comprises:
receiving an RRC connection release message from a third access network device, wherein the RRC connection release message is used to release an RRC state that is associated with the second identifier and that is of the first terminal device to an RRC idle state or the RRC inactive state.

17. A communication method, wherein the method comprises:
receiving third indication information from a first terminal device, wherein the third indication information is used to indicate a first identifier and a second identifier of the first terminal device;
determining that a first service of the first terminal device arrives, wherein the first service is associated with the first identifier, and a radio resource control RRC state that is associated with the first identifier and that is of the first terminal device is an RRC inactive state or an RRC idle state; and
determining, based on a service type or a service priority of the first service and a service type or a service priority of a second service, whether to process the first service, wherein the second service is associated with the second identifier.

18. The method according to claim 17, wherein the third indication information comprises capability information of the first terminal device, and the capability information is used to indicate that a transmission capability of the first terminal device is single transmission.

19. The method according to claim 17, wherein if it is determined to process the first service, the method further comprises:
sending fourth indication information to an access network device, wherein the fourth indication information is used to indicate the access network device to page the first identifier of the first terminal device.

20. The method according to claim 18 or 19, wherein if it is determined to process the first service, the method further comprises:
sending first indication information to the access network device, wherein the first indication information is used to indicate to release an RRC state that is associated with the second identifier and that is of the first terminal device to the RRC idle state or the RRC inactive state; and/or
sending second indication information to a second core network device, wherein the second indication information is used to indicate the second core network device to stop sending data of the second service to the access network device.

21. The method according to any one of claims 17 to 20, wherein the method further comprises:
receiving service priority information from the first terminal device, wherein the service priority information comprises a service priority of a service of at least one service type of the first terminal device.

22. A communication method, wherein the method comprises:
sending third indication information to a first core network device, wherein the third indication information is used to indicate a first identifier and a second identifier of a first terminal device;
receiving data of a second service from an access network device, wherein the second service is associated with the second identifier, and a radio resource control RRC state that is associated with the second identifier and that is of the first terminal device is an RRC connected state;
receiving an RRC connection release message from the access network device, wherein the RRC connection release message is used to release the RRC state that is associated with the second identifier and that is of the first terminal device to an RRC inactive state or an RRC idle state;
receiving a paging message from the access network device, wherein the paging message comprises the first identifier, and an RRC state that is associated with the first identifier and that is of the first terminal device is the RRC inactive state; and
receiving data of a first service from the access network device, wherein the first service is associated with the first identifier, and a service priority of the first service is higher than a service priority of the second service.

23. The method according to claim 22, wherein the third indication information comprises capability information of the first terminal device, and the capability information is used to indicate that a transmission capability of the first terminal device is single transmission.

24. The method according to claim 22 or 23, wherein the method further comprises:
receiving an RRC connection release message from the access network device, wherein the RRC connection release message is used to release the RRC state that is associated with the second identifier and that is of the first terminal device to the RRC idle state or the RRC inactive state.

25. The method according to any one of claims 22 to 24, wherein the method further comprises:
sending, by the first terminal device, service priority information to the first core network device, wherein the service priority information comprises a service priority of a service of at least one service type of the first terminal device.

26. A communication apparatus, wherein the apparatus comprises a processing module and a transceiver module, and the processing module is coupled to the transceiver module and is configured to perform the method according to either of claims 1 and 2, configured to perform the method according to any one of claims 3 to 6, configured to perform the method according to any one of claims 7 to 10, configured to perform the method according to any one of claims 11 to 13, configured to perform the method according to any one of claims 14to 16, configured to perform the method according to any one of claims 17 to 21, or configured to perform the method according to any one of claims 22 to 25.

27. A communication apparatus, wherein the apparatus comprises at least one processor, and the at least one processor is coupled to at least one memory; and
the at least one processor is configured to execute a computer program or instructions stored in the at least one memory, to enable the apparatus to perform the method according to either of claims 1 and 2, enable the apparatus to perform the method according to any one of claims 3 to 6, enable the apparatus to perform the method according to any one of claims 7 to 10, enable the apparatus to perform the method according to any one of claims 11 to 13, enable the apparatus to perform the method according to any one of claims 14 to 16, enable the apparatus to perform the method according to any one of claims 17 to 21, or enable the apparatus to perform the method according to any one of claims 22 to 25.

28. A readable storage medium, configured to store instructions, wherein when the instructions are executed, the method according to either of claims 1 and 2 is implemented, the method according to any one of claims 3 to 6 is implemented, the method according to any one of claims 7 to 10 is implemented, the method according to any one of claims 11 to 13 is implemented, the method according to any one of claims 14 to 16 is implemented, the method according to any one of claims 17 to 21 is implemented, or the method according to any one of claims 22 to 25 is implemented.

29. A chip, comprising a processor and an interface circuit, wherein
the interface circuit is configured to: receive code instructions and transmit the code instructions to the processor; and
the processor is configured to run the code instructions to perform the method according to either of claims 1 and 2, the processor is configured to run the code instructions to perform the method according to any one of claims 3 to 6, the processor is configured to run the code instructions to perform the method according to any one of claims 7 to 10, the processor is configured to run the code instructions to perform the method according to any one of claims 11 to 13, the processor is configured to run the code instructions to perform the method according to any one of claims 14 to 16, the processor is configured to run the code instructions to perform the method according to any one of claims 17 to 21, or the processor is configured to run the code instructions to perform the method according to any one of claims 22 to 25.

30. A communication system, comprising an apparatus configured to implement the method according to either of claims 1 and 2, an apparatus configured to implement the method according to any one of claims 3 to 6, and an apparatus configured to implement the method according to any one of claims 7 to 10;
comprising an apparatus configured to implement the method according to any one of claims 11 to 13 and an apparatus configured to implement the method according to any one of claims 14 to 16; or
comprising an apparatus configured to implement the method according to any one of claims 17 to 21 and an apparatus configured to implement the method according to any one of claims 22 to 25.
